# EUROPEAN PATENT SPECIFICATION

(11) **EP 1 155 948 B1**
(45) Date of publication and mention of the grant of the patent: **28.10.2009**
(21) Application number: 01111785.0
(22) Date of filing: 15.05.2001
(51) Int. Cl.: B62J 6/12

(54) **Bicycle hub dynamo and bicycle**
Radnabendynamo für Fahrrad
Dynamo pour moyeu de roue de bicyclette

(30) Priority: 17.05.2000 JP 2000144305
(43) Date of publication of application: 21.11.2001
(73) Proprietor: SANYO ELECTRIC CO., LTD., Moriguchi-shi, Osaka 570-8677 (JP)
(72) Inventor: Fukuda, Hitoshi, Kanzaki-gun, Hyogo (JP)
(74) Representative: Urner, Peter

(56) References cited:
- EP-A- 0 982 834
- FR-A- 2 786 458
- GB-A- 611 427
- GB-A- 1 244 726

## Description

### FIELD OF THE INVENTION

The present invention relates to improvements in the cores of hub dynamos serving as generators for bicycles.

### BACKGROUND OF THE INVENTION

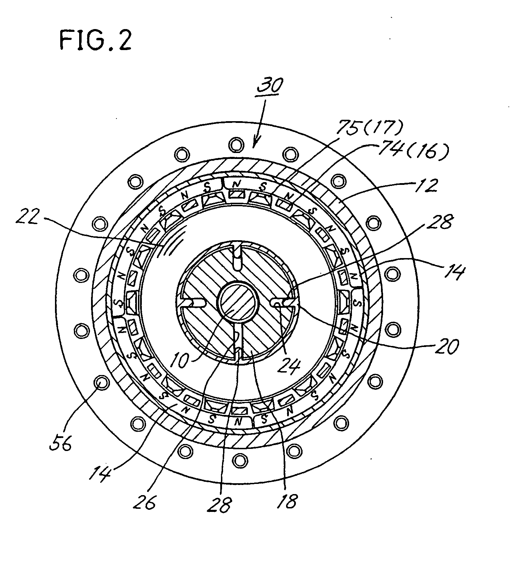

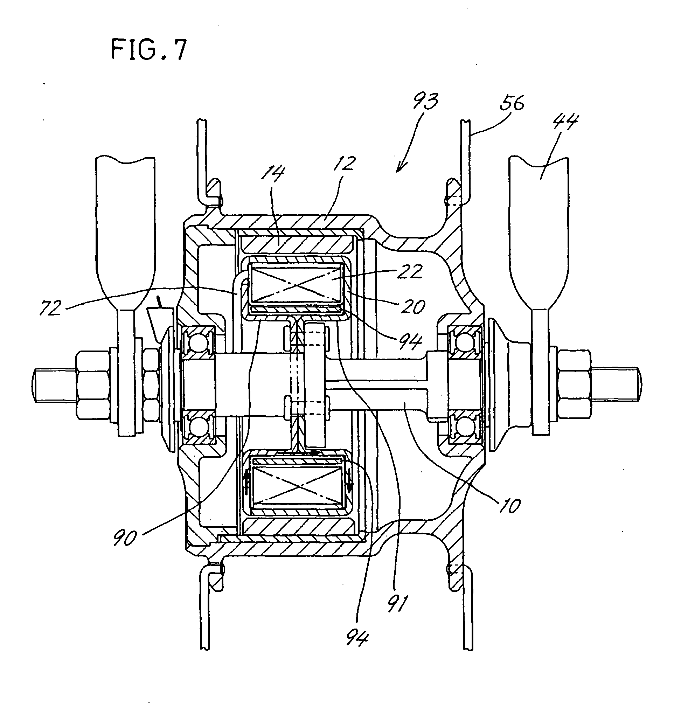

JP-A No. 7-291166 (B62J6/12) discloses a hub dynamo serving as a generator for bicycles. As shown in FIG. 7, the disclosed hub dynamo 93 has a stator comprising a pair of stator cores 90, 91 provided on the hub spindle 10 of the front wheel or rear wheel of the bicycle and a coil bobbin 20 having a generator coil 22 provided therearound and disposed inside the stator cores 90, 91, and a rotor comprising permanent magnets 14 opposed to the stator and arranged on a hub member 12 rotatably supported by the hub spindle 10. The permanent magnets 14 are arranged with N poles and S poles positioned alternately circumferentially of the hub member (see FIG. 2). Each of the stator cores 90, 91 is provided, at the outer periphery thereof, with magnetic pole pieces opposed to the respective N poles or S poles and arranged with the pole pitch of the magnets 14, such that when the stator core 90 is opposed to the N poles of the magnets 14, the other stator core 91 is opposed to the S poles thereof. Accordingly, a magnetic path is formed which extends from the N pole toward the S pole via the stator core 90, joints between the hub spindle 10 and the cores, and stator core 91.

One of the electrical ends of the generator coil 22 is connected to a lamp (not shown) on the bicycle, for example, by a lead wire 72.

The dynamo 93 generates power in the following manner.

When the wheel is rotated, the permanent magnets 14 rotate which are attached to the hub member 12 rotatable with the wheel. The magnetic flux extending from the permanent magnet 14 alternately repeats a state wherein one of the opposed stator cores 90, 91 becomes N pole with the other core serving as S pole, and a state wherein one of the cores becomes S pole with the other core serving as N pole, producing alternating magnetic flux. The alternating flux produced inside the generator coil 22 generates current through the coil 22 for power generation.

The alternating flux produced in the stator cores 90, 91 circulates through the stator cores 90, 91 as indicated by arrows in FIG. 7.

Since the stator cores 90, 91 are joined to each other at their center portions, i.e., portions thereof fixed to the hub spindle 10, there is the problem that the joint between the stator cores 90, 91 has great magnetic resistance. In order to reduce the magnetic resistance between the stator cores 90, 91, the dynamo disclosed in the above publication has a hollow cylindrical auxiliary core 94 disposed around the joint between the cores 90, 91 as shown in FIG. 7, whereby the magnetic resistance involved in the joint between the stator cores 90, 91 is diminished.

Eddy currents are generated in the stator cores 90, 91 due to the passage of alternating flux. It is necessary to suppress the generation of eddy currents to the greatest possible extent since the eddy currents result in an impaired power generation efficiency, whereas the hub dynamo 93 of the foregoing construction fails to achieve a fully improved generation efficiency because the eddy currents produced are greater by an amount corresponding to an increase in the amount of alternating flux passing through the joints between the stator cores 90, 91.

An object of the present invention is to provide a bicycle hub dynamo wherein stator cores are reduced in magnetic resistance and adapted to suppress the generation of eddy currents so as to achieve an improved power generation efficiency, and to provide a bicycle equipped with the hub dynamo.

GB 611 427 describes a dynamo according to the preamble of claim 1 built within the hub of a bicycle wheel. The dynamo comprises a casing that is attached to the hub by means of screws inside, the casing carries a ring magnet. The hub axle carries an iron bushing upon which there is wound a coil. At either side of the coil there are disposed pieces of iron having inwardly bent webs.

EP 0 982 834 A1 describes a claw-pole dynamo having an annular member with a magnet extending in a circumferential direction thereof for rotation around an axis. A first stator yoke having a first annular portion and a plurality of first pole shoes extending in a direction of the axis and in close proximity to the magnet. A second yoke is arranged on the hub having a second annular portion and a plurality of second pole shoes extending in a direction of the axis and in close proximity to the magnet, wherein the plurality of first pole shoes are interleaved with the plurality of second pole shoes in the circumferential direction of the first and second annular portions. Between the first and second stator yokes a core yoke is arranged for magnetically coupling the first and second stator yokes and for transmitting a magnetic flux in the direction of the axis of the hub. Further, a coil is disposed around the core yoke.

### SUMMARY OF THE INVENTION

The present invention provides a hub dynamo for bicycles which comprises permanent magnets arranged inside a hub member, two stator cores mounted on a hub spindle and having a plurality of pole pieces arranged on a circumference and opposed to respective magnetic poles of the permanent magnets, and a coil provided around a coil bobbin disposed between the stator cores. The stator cores are magnetically connected together by a hollow cylindrical core on the hub spindle, the cylindrical core having one or a plurality of slits formed in an outer peripheral surface thereof in a direction parallel to the hub spindle.

Since the cylindrical core has slits formed in its outer peripheral surface, this core is electrically insulated circumferentially thereof by the slits. Accordingly, the eddy currents that would flow circumferentially of the cylindrical core can be blocked by the slits to achieve an improved power generation efficiency. This serves to render the dynamo compacted and lightweight, further diminishing the torque required for the generation of power.

Preferably, the cylindrical core has the slit extending to an inner surface of this core to separate the cylindrical core circumferentially thereof by the slit.

The cylindrical core can be electrically insulated completely circumferentially thereof by the slit extending to the inner surface of this core and separating the core. This greatly suppresses the generation of eddy currents that would flow circumferentially of the cylindrical core to achieve a further improved generation efficiency.

It is desirable that the cylindrical core be made of a sintered powder material or a soft magnetic iron material of pure iron type.

When the cylindrical core is prepared from the sintered powder material or the soft magnetic iron material of pure iron type, the attenuation of alternating flux can be suppressed to achieve an improved generation efficiency.

Preferably, the coil bobbin has a rib projecting inward therefrom and fitting in the slit formed in the outer peripheral surface of the cylindrical core, whereby the cylindrical core is positioned in place relative to the coil bobbin.

Instead of securing the cylindrical core directly to the hub spindle or coil bobbin, the cylindrical core is positioned in place by fitting the rib formed on the inner surface of the coil bobbin into the slit, so that even if the cylindrical core is subjected to an impact due to the vibration or shake of the bicycle, the impact can be absorbed by the rib more effectively than when the core is secured directly to the hub spindle. This makes it less likely for the force of impact to act on the core, protecting the core from damage. Especially in the case where the cylindrical core is prepared from the sintered powder material, the material serves to inhibit the stress to be produced in the core to effectively prevent damage although hard and brittle.

The present invention further provides a hub dynamo for bicycles which comprises permanent magnets arranged inside a hub member, two stator cores mounted on a hub spindle and having a plurality of pole pieces arranged on a circumference and opposed to respective magnetic poles of the permanent magnets, and a coil provided around a coil bobbin disposed between the stator cores, the stator cores being magnetically connected together by a hollow cylindrical core mounted on the hub spindle and made of a sintered powder material or a soft magnetic iron material of pure iron type.

With the hub dynamo described for use in bicycles, the cylindrical core is prepared from the sintered powder material or soft magnetic iron material of pure iron type which is small in magnetic resistance. This achieves an improved generation efficiency, further making the dynamo compacted.

The present invention provides a bicycle having the hub dynamo described above and mounted on a front wheel or rear wheel thereof, the hub dynamo being electrically connected to a head lamp and/or a tail lamp.

The hub dynamo exhibiting a high power generation efficiency and mounted on the bicycle as a generator is diminished in the torque required for power generation, can be compacted and therefore serves to make the bicycle lightweight and to reduce the pedaling force necessary for power generation.

### BRIEF DESCRIPTION OF THE DRAWINGS

FIG. 1 is a sectional view showing a hub dynamo of the invention and containing a hub spindle;
FIG. 2 is a view in section taken along the line II-II in FIG. 1;
FIG. 3A is a side elevation of a stator core, FIG. 3B is a front view of the stator core;
FIG. 4A is a side elevation of a core, FIG. 4B is a front view of the core;
FIG. 5 is an enlarged view of the front wheel portion of a bicycle equipped with the hub dynamo of the invention;
FIG. 6 includes side elevations of cores of lot Nos. 1 to 6 used in the embodiment; and
FIG. 7 is a view in section showing a conventional hub dynamo and containing a hub spindle.

### DESCRIPTION OF THE PREFERRED EMBODIMENT

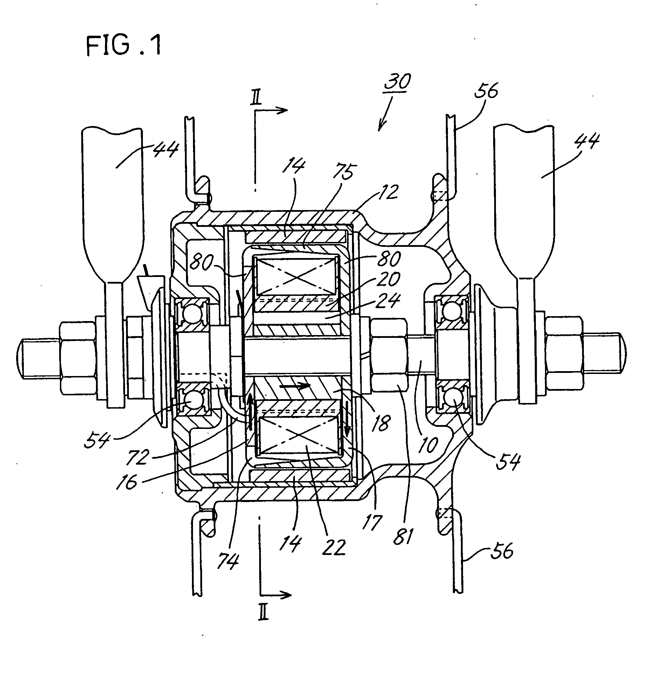

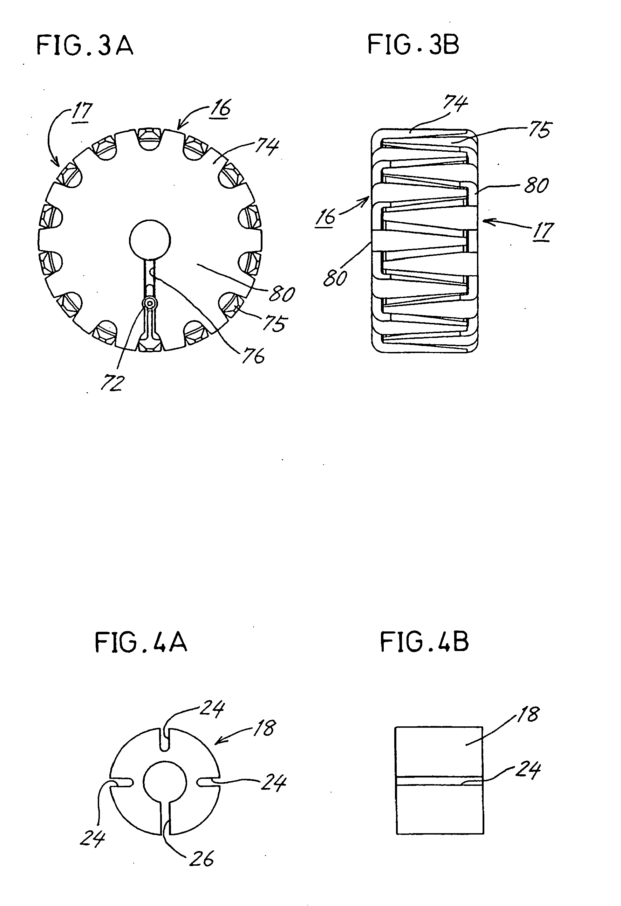

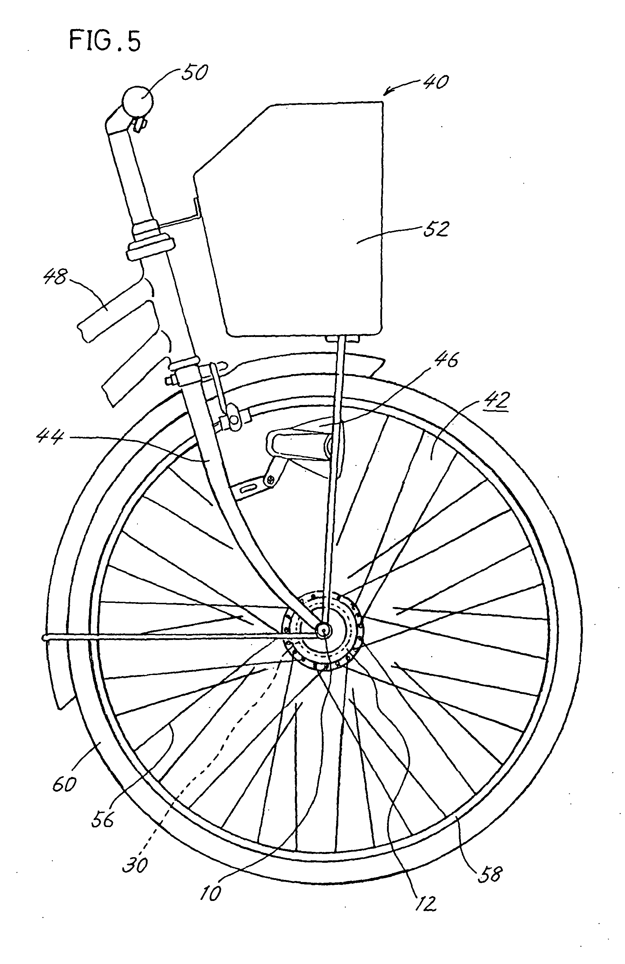

FIG. 1 is a sectional view showing a hub dynamo 30 of the invention and containing the direction of a hub spindle; FIG. 2 is a view in section taken along the line II-II in FIG. 1; FIG. 3A is a side elevation of stator core 16 or 17, FIG. 3B is a front view of the stator core; FIG. 4A is a side elevation of a core 18, FIG. 4B is a front view of the core 18; and FIG. 5 is an enlarged view of the front wheel portion of a bicycle 40 equipped with the hub dynamo 30.

The hub dynamo 30 of the present invention is mounted on the front wheel portion or rear wheel portion of the bicycle 40. The hub dynamo 30 as mounted on the front wheel will be described below as an example.

As shown in FIG. 5, the bicycle 40 has a hub spindle 10 rotatably supporting the front wheel 42 and mounted on a front fork 44. Power is supplied to a head lamp 46 disposed at a side portion of the front wheel 42 and a tail lamp (not shown) disposed on the rear wheel. The front fork 44 is supported by a bicycle frame 48 and has attached to its upper end a handle 50 and a front basket 52.

With reference to FIG. 1, the hub spindle 10 is fixed at its opposite sides to the front fork 44. A cylindrical hub member 12 is rotatably mounted on the hub spindle 10, with bearings 54, 54 interposed therebetween. Spokes 56 are attached to the hub member 12. A tire 60 is attached to a rim 58 at the outer ends of the spokes 56 as seen in FIG. 5.

The hub spindle 10 is provided with a stator. As seen in FIG. 1, the stator comprises a hollow cylindrical core 18, coil bobbin 20, generator coil 22 and a pair of stator cores 16, 17.

As shown in FIGS. 4A and 4B, the core 18 has a plurality of slits 24, 26 extending radially inward from its outer periphery. Preferably, the core 18 has a radial thickness of 7 to 9 mm to give reduced magnetic resistance to the core 18. It is also preferable to make core from a sintered powder material such as ferrite or a soft magnetic iron material of pure iron type. The core 18 can be given an increased cross sectional area and diminished magnetic resistance by giving an increased thickness to the core 18.

It is desired that the slits 24 to be formed in the core 18 be 6 to 7 mm in depth, and that one slit 26 extend to the inner surface of the tube so as to impart electrical insulation circumferentially thereof.

Fitted around the core 18 is a coil bobbin 20 having the generator coil 22 provided therearound. One of the electrical ends of the coil 22 is connected to the head lamp 46 by way of a lead 72, and the other end thereof is connected directly, for example, to the hub spindle 10 and electrically connected to the head lamp 46 via the front fork 44. The coil bobbin 20 can be prepared from a resin material and can be an annular body which is channel-shaped in cross section and opened toward the outer periphery thereof as shown in FIG. 1. One or a plurality of ribs 28 extend from the inner periphery of the bobbin 20 as seen in FIG. 2 and are fitted in the slits 24 and/or the slit 26, whereby the core 18 is positioned in place and held against rotation.

The stator cores 16, 17 are arranged at opposite sides of the core 18. As shown in FIGS. 3A and 3B, each stator core 16 (17) comprises a disk 80 and many inwardly bent magnetic pole pieces 74 (75) projecting from the outer periphery of the disk 80. The pole pieces 74 are equidistantly spaced apart from the pole pieces 75 of the counterpart stator core 17 opposed thereto. The stator cores 16, 17 can be made from a rolled steel material for use in general structures.

Preferably, the disk 80 of each of the stator cores 16, 17 has an incision 76 extending from the center thereof to the outer periphery thereof for suppressing the generation of eddy currents in the stator core. The lead 72 extending from the generator coil 22 can be passed through the incision 76.

The stator can be mounted on the hub spindle 10 by holding the core 18 and the coil bobbin 20 provided with the generator coil 22 between the stator cores 16, 17, fitting the resulting assembly around the hub spindle 10 and fastening the assembly to the spindle by tightening a nut 81.

The hub member 12 is provided with a rotor. The rotor comprises permanent magnets 14 arranged circumferentially of the hub member and corresponding in number to the number of the pole pieces 74, 75 of the stator cores 16, 17. The permanent magnets 14 are arranged with the N poles and S poles alternating on the inner side thereof.

When the wheel (front wheel 42) is rotated by running the bicycle to operate the dynamo 30 thus constructed, the rotor rotates relative to the stator, with the result that the permanent magnets 14 move around the pole pieces 74, 75 of the stator cores 16, 17.

When the pole pieces 74 of the stator core 16 are opposed to the N poles of the permanent magnets 14, the pole pieces 75 of the other stator core 17 are opposed to the S poles of the magnets 14, producing magnetic flux directed from the pole pieces 74 of the stator core 16, through the disk 80 thereof, the core 18 and the disk 80 of the other stator core 17 and toward the pole pieces 75 thereof as indicated by arrows in FIG. 1.

When the pole pieces 74 of the stator core 16 are opposed to the S poles, with the pole pieces 75 of the other stator core 17 opposed to the N poles by a further rotation of the front wheel 42, magnetic flux is produced which is conversely directed from the pole pieces 75 of the stator core 17, through the disk 80 thereof, the core 18 and the disk 80 of the opposed stator core 16 and toward the pole pieces 74 thereof.

The rotation of the front wheel 42 changes the poles of the permanent magnets 14 opposed to the pole pieces 74, 75 of the stator cores 16, 17, whereby the above magnetic fluxes are produced alternately, hence alternating flux.

The alternating flux through the stator cores 16, 17 and the core 18 generates a current in the generator coil 22.

Eddy currents are produced in the core 18 by the alternating flux extending through the core 18 at this time, whereas the flow of currents in the circumferential direction of the core 18 is blocked by the slits 24, 26 formed in the periphery of the core 18, with the result that no eddy currents flow circumferentially of the core 18. Accordingly, the occurrence of eddy currents is suppressed to prevent the impairment of generation efficiency due to the eddy currents.

### EXAMPLE

Cores 18 were prepared with different numbers of slits 14, 16 formed therein using different materials, incorporated into hub dynamos 30 and checked for the voltage produced for comparison.

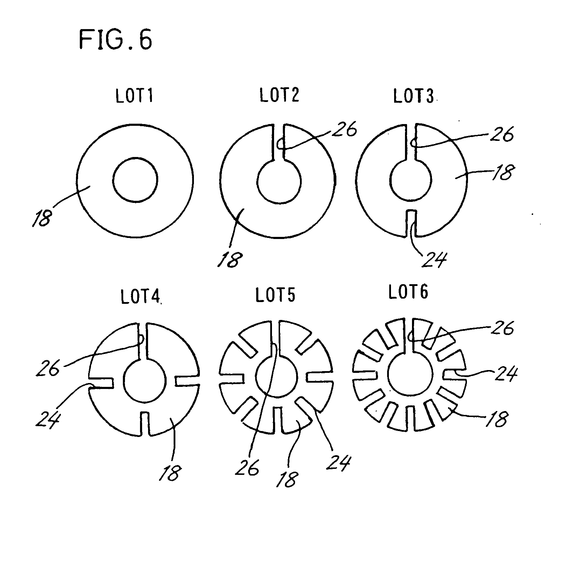

The cores were in the form of cylinders measuring 26 mm in outside diameter, 9 mm in inside diameter and 21 mm in length and having slits 24, 26 as shown in FIG. 6. With reference to FIG. 6, the number of slits 24, 26 formed in the cores 18 was 0 (lot No. 1), 1 (lot No. 2), 2 (lot No. 3), 4 (lot No. 4 ) 8 (lot No. 5) or 12 (lot No. 6).

The cores 18 of lot Nos. 1 to 6 were prepared from a low carbon steel material [general structural rolled steel JIS SS400 (SS41)] and heat-treated for annealing. Lot No. 1 is comparative example.

Additional cores of lot Nos. 1 and 2 were prepared from a magnetic steel material of pure iron type (soft magnetic iron JIS SUYB0-SUYB3) and also from a powder metallurgical magnetic material of ferrite type (soft magnetic material of iron oxide type).

Voltage measurements were obtained under the following conditions.
Speed of rotation of the wheel: 120 rpm
   (corresponding to 15 km/h with 26-inch wheel)
Stator cores: T2.3 SPCC, annealed, with incision 76
   (see FIG. 3A)
Generator coil: 0.65 mm in diameter, 325 turns

Table 1 shows the results. The voltage produced is indicated in terms of a value relative to the measurement obtained for lot No. 1 of the powder metallurgical magnetic material of ferrite type which is taken as 100.

**Table 1**

| | | | | | | | |
|---|---|---|---|---|---|---|---|
| Lot No. | | 1 | 2 | 3 | 4 | 5 | 6 |
| Number of slits | | 0 | 1 | 2 | 4 | 8 | 12 |
| Voltage produced (%) | Low carbon steel | 93 | 94 | 95 | 96 | 97 | 94 |
| | Magnetic steel of pure iron type | 96 | 97 | -- | -- | -- | -- |
| | Powder metallurgical magnetic material of ferrite type | 100 | 100 | -- | -- | -- | -- |

Table 1 reveals that the cores made from the low carbon steel material are improved in voltage produced by slits formed. However, lot No. 6 having 12 slits is inferior to lot No. 5 having 8 slits because an excessive number of slits formed result in increased magnetic resistance. Accordingly, at least one to up to 12 slits are suitable to form, and at least two to up to 8 slits are more desirable.

Especially lot Nos. 4 and 5 having 4 and 8 slits respectively are comparable in performance to the lots prepared from the magnetic steel material of pure iron type. Thus, highly efficient cores can be prepared from the low carbon steel material which has high workability and is inexpensive by forming an adjusted number of slits in the core.

It is seen that lot Nos. 1 and 2 prepared from the magnetic steel material of pure iron type and the powder metallurgical magnetic material of ferrite type both exhibit a high generation efficiency. The reason is that the use of the material having low magnetic resistance and low electric conductivity makes it possible to produce alternating magnetic flux with generation of eddy currents suppressed.

Apparently, the present invention can be altered and modified by one skilled in the art without departing from the scope of the invention. Such alternations or modifications are included within the scope of the invention as set forth in the appended claims.

## Claims

1. A hub dynamo for bicycles comprising permanent magnets (14) arranged inside a hub member (12), two stator cores (16,17) mounted on a hub spindle (10) and having a plurality of pole pieces arranged on a circumference and opposed to respective magnetic poles of the permanent magnets (14), and a coil (22) provided around a coil bobbin (20) disposed between the stator cores (16,17), the stator cores (16,17) are magnetically connected together by a hollow cylindrical core (18) on the hub spindle, the hub dynamo being **characterized in that**:
the hollow cylindrical core (18) having one or a plurality of slits (24,26) formed in an outer peripheral surface thereof in a direction parallel to the hub spindle (10).

2. The hub dynamo for bicycles according to claim 1 wherein the hollow cylindrical core (18) has the slit (26) extending to an inner surface of the hollow cylindrical core (18) to separate the hollow cylindrical core (18) circumferentially thereof by the slit (26).

3. The hub dynamo for bicycles according to claim 1 or 2 wherein the hollow cylindrical core (18) is made of a sintered powder material or a soft magnetic iron material of pure iron type.

4. The hub dynamo for bicycles according to any one of claims 1 to 3 wherein the coil bobbin (20) has a rib (28) projecting inward therefrom and fitting in the slit (24) or (26) formed in the outer peripheral surface of the hollow cylindrical core (18), whereby the hollow cylindrical core (18) is positioned in place relative to the coil bobbin (20).

5. A bicycle having a hub dynamo mounted on a front wheel or rear wheel thereof and electrically connected to a head lamp (46) and/or tail lamp the hub dynamo being the hub dynamo (30) according to any on of claims 1 to 4.

## Patentansprüche

1. Nabendynamo für Fahrräder, mit Permanentmagneten (14), die in einem Nabenelement (12) angeordnet sind, zwei Statorkernen (16, 17), die an einer Nabenspindel (10) montiert sind und mehrere Polstücke besitzen, die an einem Umfang und gegenüber entsprechenden Magnetpolen der Permanentmagneten (14) angeordnet sind, und einer Spule (22), die um eine Spulenhaspel (20) vorgesehen ist, die zwischen den Statorkernen (16, 17) angeordnet ist, wobei die Statorkerne (16, 17) durch einen hohlen zylindrischen Kern (18) an der Nabenspindel miteinander magnetisch verbunden sind, wobei der Nabendynamo **dadurch gekennzeichnet ist, dass**:
der hohle zylindrische Kern (18) einen oder mehrere Schlitze (24, 26) aufweist, die in seiner äußeren Umfangsfläche in einer Richtung parallel zu der Nabenspindel (10) ausgebildet sind.

2. Nabendynamo für Fahrräder nach Anspruch 1, wobei sich der Schlitz (26) des hohlen zylindrischen Kerns (18) zu einer inneren Oberfläche des hohlen zylindrischen Kerns (18) erstreckt, um den hohlen zylindrischen Kern (18) in dessen Umfangsrichtung durch den Schlitz (26) zu trennen.

3. Nabendynamo für Fahrräder nach Anspruch 1 oder 2, wobei der hohle zylindrische Kern (18) aus einem gesinterten Pulvermaterial oder aus einem weichmagnetischen Eisenmaterial des Typs reines Eisen hergestellt ist.

4. Nabendynamo für Fahrräder nach einem der Ansprüche 1 bis 3, wobei die Spulenhaspel (20) eine Rippe (28) besitzt, die hiervon nach innen vorsteht und in den Schlitz (24) oder (26) passt, der in der äußeren Umfangsoberfläche des hohlen zylindrischen Kerns (18) ausgebildet ist, wodurch der hohle zylindrische Kern (18) in Bezug auf die Spulenhaspel (20) positioniert ist.

5. Fahrrad, das einen an einem Vorderrad oder einem Hinterrad montierten Nabendynamo besitzt, der mit einem Scheinwerfer (76) und/oder mit einem Rücklicht verbunden ist, wobei der Nabendynamo der Nabendynamo (30) nach einem der Ansprüche 1 bis 4 ist.

## Revendications

1. Dynamo pour moyeu de roue de bicyclette comprenant des aimants permanents (14) agencés à l'intérieur d'un élément de moyeu (12), deux noyaux de stator (16, 17) montés sur une broche de moyeu (10) et ayant une pluralité de pièces polaires agencées sur une circonférence et opposées à des pôles magnétiques respectifs des aimants permanents (14), et un bobinage (22) prévu autour d'une bobine de bobinage (20) disposée entre les noyaux de stator (16, 17), les noyaux de stator (16, 17) étant connectés magnétiquement ensemble par un noyau cylindrique creux (18) sur la broche de moyeu, la dynamo de moyeu étant **caractérisée en ce que** :
le noyau cylindrique creux (18) possède une ou plusieurs fentes (24, 26) formées dans une surface périphérique extérieure de lui-même dans une direction parallèle à la broche de moyeu (10).

2. Dynamo pour moyeu de roue de bicyclette selon la revendication 1, dans laquelle le noyau cylindrique creux (18) présente la fente (26) s'étendant vers une surface intérieure du noyau cylindrique creux (18) pour séparer le noyau cylindrique creux (18) circonférentiellement par rapport à celui-ci par la fente (26).

3. Dynamo pour moyeu de roue de bicyclette selon la revendication 1 ou 2, dans laquelle le noyau cylindrique creux (18) est réalisé en un matériau poudreux fritté ou en un matériau en fer magnétique doux du type en fer pur.

4. Dynamo pour moyeu de bicyclette selon l'une quelconque des revendications 1 à 3, dans laquelle la bobine de bobinage (20) présente une nervure (28) en projection vers l'intérieur d'elle-même et logée dans la fente (24) ou (26) formée dans la surface périphérique extérieure du noyau cylindrique creux (18), grâce à quoi le noyau cylindrique creux (18) est positionné en place par rapport à la bobine de bobinage (20).

5. Bicyclette possédant une dynamo de moyeu de roue montée sur une roue avant ou une roue arrière de celle-ci est connectée électriquement à un phare (46) et/ou à un feu arrière, la dynamo de moyeu étant la dynamo de moyeu (30) selon l'une quelconque des revendications 1 à 4.
